# EUROPEAN PATENT APPLICATION

(11) **EP 4 598 088 A1**
(43) Date of publication of application: **06.08.2025**
(21) Application number: 23873289.5
(22) Date of filing: 04.10.2023
(51) Int. Cl.: H04W 16/28, H04W 24/08, H04W 72/27, H04B 7/06, H04B 7/08, H04B 17/345, H04L 5/14

(54) **METHOD, NETWORK NODE, PROCESSING DEVICE, AND STORAGE MEDIUM FOR PERFORMING COMMUNICATION IN WIRELESS COMMUNICATION SYSTEM**

(30) Priority: 30.09.2022 KR 20220125161
(71) Applicant: LG Electronics Inc., Yeongdeungpo-gu Seoul 07336 (KR)
(72) Inventor: SHIM, Jaenam, Seoul 06772 (KR); KO, Hyunsoo, Seoul 06772 (KR); YOU, Hyangsun, Seoul 06772 (KR); SONG, Minwoo, Seoul 06772 (KR); KIM, Seonwook, Seoul 06772 (KR)
(74) Representative: Plasseraud IP
(86) International application number: PCT/KR2023/015179
(87) International publication number: WO 2024/072182

(57) **Abstract**

Provided are a method for performing communication in a wireless communication system and a device for same. The method and device may be used to: transmit, to an adjacent network node, first intended time division duplex (TDD) configuration information about time division duplexed time period intervals including one or more downlink time intervals and one or more uplink time intervals; and receive second intended TDD configuration information including second beam information from the adjacent network, wherein the first intended TDD configuration information includes first beam information about a first time period interval among the time period intervals.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

With the introduction of new wireless communication technologies, there is a need for new methods of efficiently measuring and/or avoiding cross link interference (CLI) in order to address the challenges of CLI measurement and avoidance.

Additionally, methods of supporting CLI measurement and/or avoidance between base stations (BSs) for efficient CLI management in dynamic/flexible time division duplexing (TDD) or sub-band full duplex (SBFD) operations.

The objects to be achieved with the present disclosure are not limited to what has been particularly described hereinabove and other objects not described herein will be more clearly understood by persons skilled in the art from the following detailed description.

### Technical Solution

In an aspect of the present disclosure, provided herein is a method of performing, by a network node, communication with an adjacent network node in a wireless communication system. The method includes: transmitting, to the adjacent network node, first intended time division duplex (TDD) configuration information on a time periodicity period that includes one or more downlink time periods and one or more uplink time periods to which TDD is applied; and receiving, from the adjacent network, second intended TDD configuration information including second beam information. The first intended TDD configuration information may include first beam information regarding a first time period within the time periodicity period.

In another aspect of the present disclosure, provided herein is a processing device configured to control a network node. The processing device includes: at least one processor; and at least one memory connected to the at least one processor and storing instructions. Based on execution by the at least one processor, the instructions cause the network node to: transmit, to an adjacent network node, first intended TDD configuration information on a time periodicity period that includes one or more downlink time periods and one or more uplink time periods to which TDD is applied; and receive, from the adjacent network, second intended TDD configuration information including second beam information. The first intended TDD configuration information includes first beam information regarding a first time period within the time periodicity period.

In another aspect of the present disclosure, provided herein is a computer-readable storage medium. The computer-readable storage medium stores at least one computer program including instructions that, when executed by at least one processor, cause the at least one processor to perform operations for a network node. The operations include: transmitting, to an adjacent network node, first intended TDD configuration information on a time periodicity period that includes one or more downlink time periods and one or more uplink time periods to which TDD is applied; and receiving, from the adjacent network, second intended TDD configuration information including second beam information. The first intended TDD configuration information includes first beam information regarding a first time period within the time periodicity period.

In another aspect of the present disclosure, provided herein is a network node configured to perform communication with an adjacent network node in a wireless communication system. The network node includes: at least one transceiver; at least one processor; and at least one computer memory operably connected to the at least one processor and storing instructions that, when executed, cause the at least one processor to perform operations. The operations include: transmitting, to the adjacent network node, first intended TDD configuration information on a time periodicity period that includes one or more downlink time periods and one or more uplink time periods to which TDD is applied; and receiving, from the adjacent network, second intended TDD configuration information including second beam information. The first intended TDD configuration information may include first beam information regarding a first time period within the time periodicity period.

In each aspect of the present disclosure, the method or operations may further include configuring a beam direction for communication with a user equipment (UE) based on the first intended TDD configuration information and the second beam information.

In each aspect of the present disclosure, the first beam information may include a transmission configuration indication (TCI) state identity (ID) related to the first time period.

In each aspect of the present disclosure, the first beam information may include beam index information related to the first time period.

In each aspect of the present disclosure, the first beam information may include information regarding a transmission reception point (TRP) ID activated for the first time period.

In each aspect of the present disclosure, the first time period may be a time period configured for a sub-band full duplex (SBFD) operation of the network node within the time periodicity period.

In each aspect of the present disclosure, the first time period may be a second time period for transmitting a cell-specific downlink signal within the one or more downlink time periods or a third time period for receiving a cell-specific uplink signal within the one or more uplink time periods.

In each aspect of the present disclosure, the time periodicity period may further include at least one flexible time period, and the first time period may be the at least one flexible time period.

In each aspect of the present disclosure, the second time period may be at least one of a time period configured for transmission of a synchronization signal block (SSB), a time period configured for transmission of a channel state information reference signal (CSI-RS), a time period configured for transmission of a type 0 physical downlink control channel (type0-PDCCH), or a time period in a specific control resource set (CORESET), and the third time period may be a time period configured for reception of a random access channel (RACH).

In each aspect of the present disclosure, based on that a frequency band for the first time period is divided into a first sub-band for downlink and a second sub-band for uplink, the first beam information may include information regarding at least one of a beam direction for the first sub-band or a beam direction for the second sub-band.

The foregoing solutions are merely a part of the examples of the present disclosure and various examples into which the technical features of the present disclosure are incorporated may be derived and understood by persons skilled in the art from the following detailed description.

### Advantageous Effects

According to some implementation(s) of the present disclosure, cross link interference (CLI) avoidance may be performed efficiently.

According to the implementation(s) of the present disclosure, the time required for a base station (BS) to perform CLI measurement may be reduced.

According to the implementation(s) of the present disclosure, a beam direction may be adjusted by exchanging beam information between BSs.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure.
FIG. 1 illustrates the structure of a Long Term Evolution (LTE) system.
FIG. 2 illustrates the structure of a New Radio (NR) system.
FIG. 3 illustrates an example of a frame structure available in 3^{rd} generation partnership project (3GPP) based wireless communication system.
FIG. 4 illustrates a resource grid of a slot.
FIG. 5 illustrates slot structures used in a 3GPP-based system.
FIG. 6 is a diagram for explaining physical channels available in 3GPP-based wireless communication systems and signal transmission methods using the channels.
FIG. 7 illustrates an exemplary flow of a method of performing cross link interference (CLI) measurement.
FIG. 8 is a diagram for explaining a method of performing full duplex operation in a NR system.
FIG. 9 and FIG. 10 are diagrams for explaining sub-band full duplex (SBFD) and single frequency full duplex (SFFD) operations.
FIG. 11 illustrates an exemplary flow of a communication method performed by a network node according to some implementation(s) of the present disclosure.
FIG. 12 illustrates an example of a communication system 1 to which implementations of the present disclosure are applied.
FIG. 13 is a block diagram illustrating examples of communication devices capable of performing a method according to the present disclosure.
FIG. 14 illustrates another example of a wireless device capable of performing implementation(s) of the present disclosure.

### DETAILED DESCRIPTION

Hereinafter, implementations according to the present disclosure will be described in detail with reference to the accompanying drawings. The detailed description, which will be given below with reference to the accompanying drawings, includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE. 3GPP new radio or new radio technology (3GPP NR) is an evolved version of 3GPP LTE/LTE-A.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, 3GPP TS 38.423, etc.

In examples of the present disclosure described later, if a device "assumes" something, this may mean that a channel transmission entity transmits a channel in compliance with the corresponding "assumption" This also may mean that a channel reception entity receives or decodes the channel in the form of conforming to the "assumption" on the premise that the channel has been transmitted in compliance with the "assumption"

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (DL PCC). A carrier corresponding to the Scell on DL is referred to as a downlink secondary CC (DL SCC), and a carrier corresponding to the Scell on UL is referred to as an uplink secondary CC (UL SCC).

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUSCH/PUCCH/PRACH, respectively. In addition, "the BS transmits/receives a PBCH/PDCCH/PDSCH" is used as the same meaning that the BS transmits the broadcast information/DL data/DCI on or through a PBCH/PDCCH/PDSCH, respectively.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as a NR system.

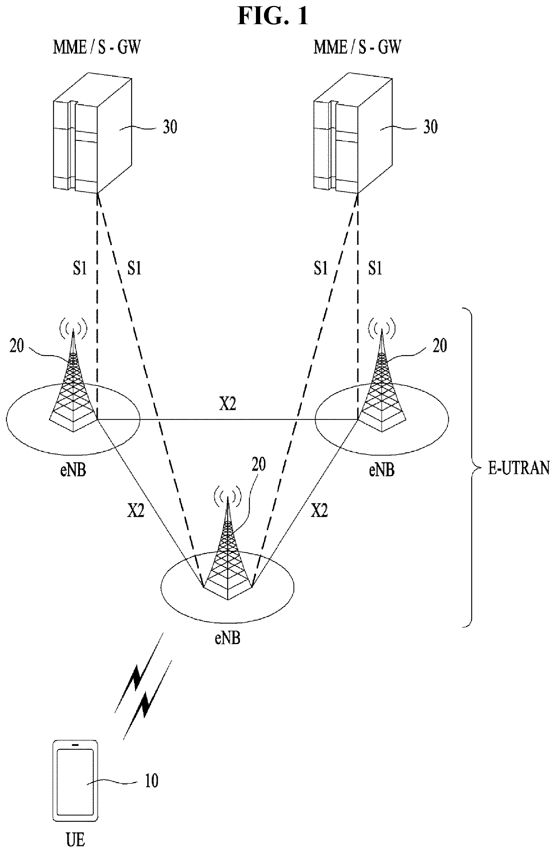

FIG. 1 illustrates the structure of an LTE system. This may also be called an evolved UMTS terrestrial radio access network (E-UTRAN) or LTE/LTE-A system.

Referring to FIG. 1, the E-UTRAN includes evolved Node Bs (BSs) 20 which provide a control plane and a user plane to UEs 10.

BSs 20 may be connected to each other via an X2 interface. A BS 20 is connected to an evolved packet core (EPC) 39 via an S1 interface. More specifically, the BS 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and a BS.

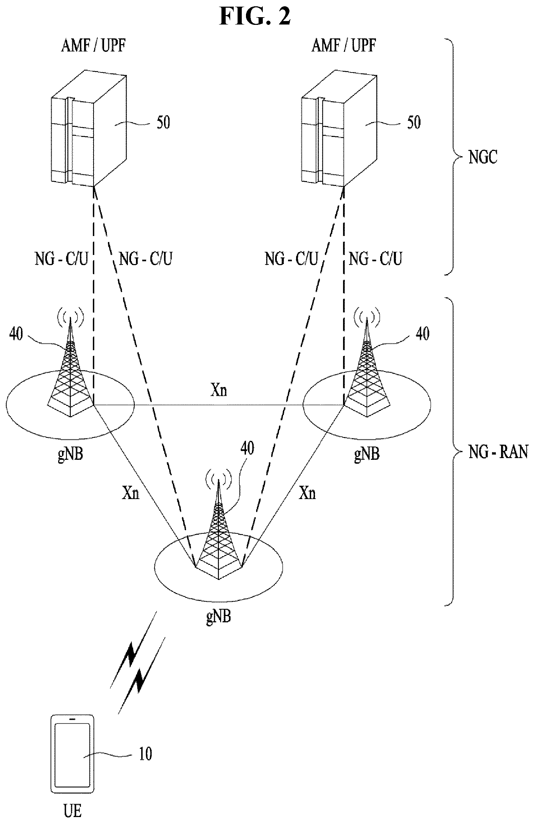

FIG. 2 illustrates the structure of a NR system.

Referring to FIG. 2, a next generation radio access network (NG-RAN) may include a next generation Node B (gNB) and/or an eNB. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

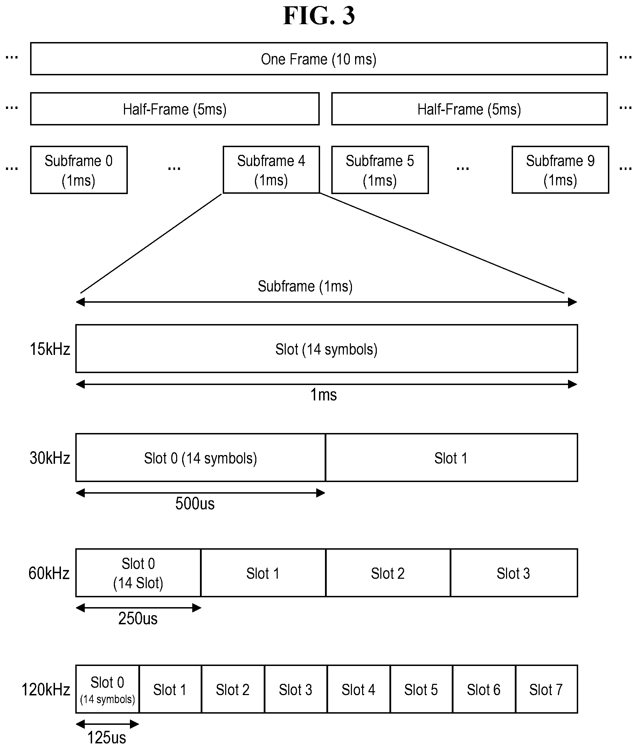

FIG. 3 illustrates an example of a frame structure available in 3^{rd} generation partnership project (3GPP) based wireless communication system.

The frame structure of FIG. 3 is purely exemplary and the number of subframes, the number of slots, and the number of symbols, in a frame, may be variously changed. In a NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 3, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref} = 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

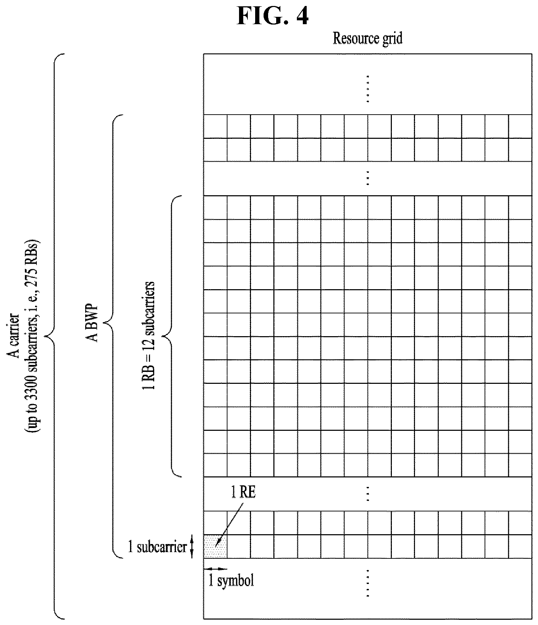

FIG. 4 illustrates a resource grid of a slot.

The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u*. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

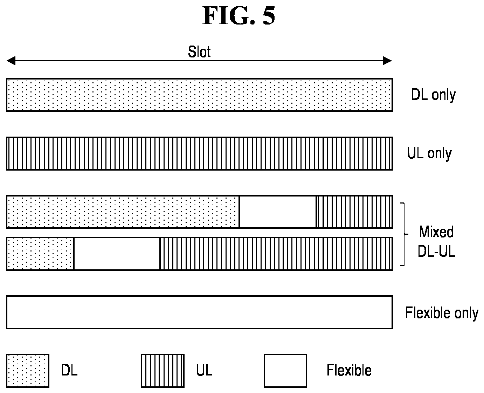

FIG. 5 illustrates slot structures used in a 3GPP-based system.

In all 3GPP-based systems, for example, in a NR system, each slot may have a self-contained structure including i) a DL control channel, ii) DL or UL data, and/or iii) a UL control channel. For example, the first N symbols in a slot may be used to transmit the DL control channel (hereinafter, DL control region) and the last M symbols in a slot may be used to transmit the UL control channel (hereinafter, UL control region), where N and M are integers other than negative numbers. A resource region (hereinafter, data region) between the DL control region and the UL control region may be used to transmit DL data or UL data. Symbols in a single slot may be divided into group(s) of consecutive symbols that may be used as DL symbols, UL symbols, or flexible symbols. Hereinbelow, information indicating how each symbol in slot(s) is used will be referred to as a slot format. For example, which symbols in slot(s) are used for UL and which symbols in slot(s) are used for DL may be defined by a slot format.

When a BS intends to operate a serving cell in time division duplex (TDD) mode, the BS may configure a pattern for UL and DL allocation for the serving cell through higher layer (e.g., RRC) signaling. For example, the following parameters may be used to configure a TDD DL-UL pattern:
- *dl-UL-TransmissionPeriodicity* that provides a periodicity of the DL-UL pattern;
- *nrofDownlinkSlots* that provides the number of consecutive full DL slots at the beginning of each DL-UL pattern, where the full DL slots are slots having only DL symbols;
- *nrofDownlinkSymbols* that provides the number of consecutive DL symbols at the beginning of a slot immediately following the last full DL slot;
- *nrofUplinkSiots* that provides the number of consecutive full UL slots at the end of each DL-UL pattern, where the full UL slots are slots having only UL symbols; and
- *nrofUplinkSymbols* that provides the number of consecutive UL symbols in the end of a slot immediately preceding the first full UL slot.

The remaining symbols that are not configured as either DL symbols or UL symbols among symbols in the DL-UL pattern are flexible symbols.

If the UE is provided with a configuration for the TDD DL-UL pattern, i.e., a TDD UL-DL configuration (e.g., *tdd-UL-DL-ConfigurationCommon,* or *tdd-UL-DLConfigurationDedicated),* through higher layer signaling, the UE sets a slot format per slot over a number of slots based on the configuration.

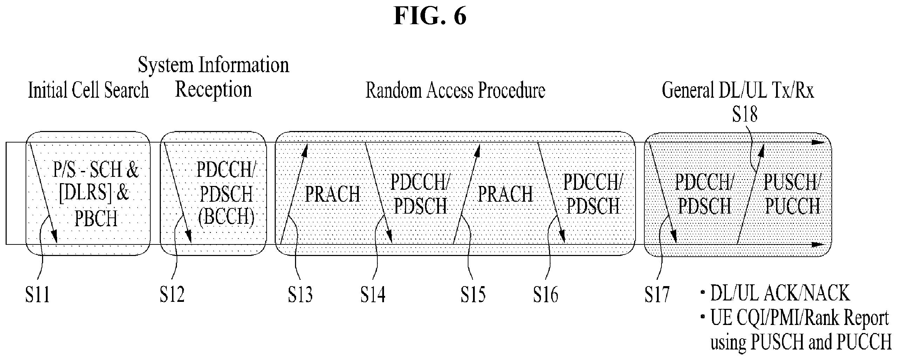

FIG. 6 is a diagram for explaining physical channels available in 3GPP-based wireless communication systems and signal transmission methods using the channels.

Referring to FIG. 6, a UE that is turned on again after being off or a UE that enters a new cell performs initial cell search such as synchronizing with a BS in step S101. For the initial cell search, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After completing the initial cell search, the UE may receive a physical downlink control channel (PDCCH) and a physical downlink shared channel (PDSCH) based on information in the PDCCH to obtain more detailed system information (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). The UE may transmit a physical uplink shared channel (PUSCH) based on scheduling information in the RAR (S15) and perform a contention resolution procedure, such as receiving a PDCCH signal and a PDSCH channel signal related thereto (S16).

On the other hand, in the case of a random access procedure performed in two steps (2-step RACH or type-2 random access procedure) in addition to a random access procedure performed in four steps (4-step RACH or type-1 random access procedure), S13/S15 may be performed as one operation where the UE performs transmission (for example, an operation of transmitting message A including a PRACH preamble and/or a PUSCH), and S14/S16 may be performed as one operation where the BS performs transmission (for example, an operation of transmitting message B including an RAR and/or contention resolution information).

After performing the procedure described above, the UE may perform the general UL/DL signal transmission procedure, including receiving a PDCCH signal and/or PDSCH signal (S17) and transmitting a PUSCH signal and/or physical uplink control channel (PUCCH) signal (S18).

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

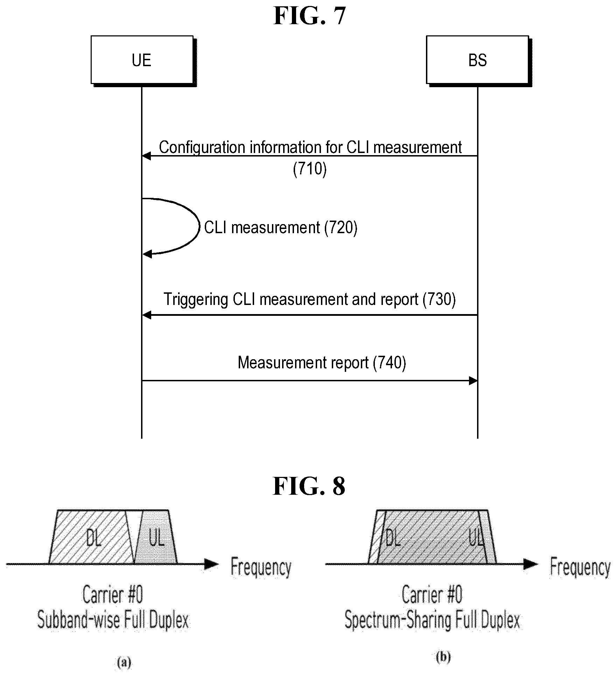

FIG. 7 illustrates an exemplary flow of a method of performing cross link interference (CLI) measurement.

Referring to FIG. 7, the UE receives a measurement configuration for CLI measurement from the BS (710). The measurement configuration may include measObject, reportConfig, measID, quantityConfig, etc. The UE performs the measurement based on the received measurement configuration (720). The UE prepares to report measurement results including measurement values, based on the satisfaction of reporting conditions (730). Depending on the reporting conditions, the measurement report may be periodic or event-based. The measurement results are transmitted to the BS. Thereafter, the UE may perform operations for handover or resource reconfiguration based on an RRC reconfiguration message received from the BS.

FIG. 8 is a diagram for explaining a method of performing full duplex operation in a NR system.

In 5G, new types of services such as extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in FIG. 8(a) and a spectrum-sharing full duplex (SS-FD) scheme illustrated in FIG. 8(b).

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

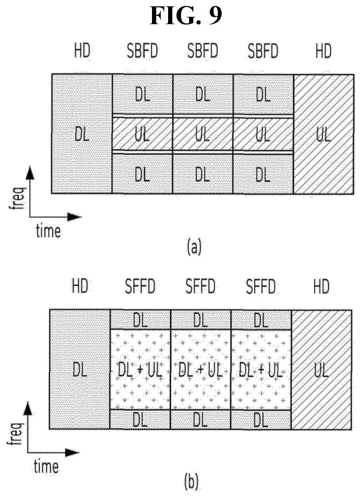

Specifically, referring to FIG. 9, time resources may include time resources for half duplex (HD) operation and time resources for full duplex (FD) operation such as SB-FD or SS-FD. As shown in (a) of FIG. 9, the time resources may include time resources for SB-FD operation and the remaining time resources for HD operation. Alternatively, as shown in (b) of FIG. 9, the time resources may include time resources for SS-FD operation and the remaining time resources for HD operation. In this case, the unit of time resources (for SB-FD operation, SS-FD operation, or HD operation) may be a slot or symbol unit. For the time resources operating in SB-FD, some frequency resources may be used as DL resources, and some frequency resources may be used as UL resources.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a BS and a UE. For example, both the BS and the UE may perform transmission and reception of DL/UL simultaneously by using the same or different frequency resources in the same time resource. Alternatively, only the BS may perform an FD operation (in the same time resource) and the UE may perform an HD operation. The BS may simultaneously perform transmission and reception of DL and UL by using the same or different frequency resources in the same time resource, but the UE may perform only DL reception or UL transmission in a specific time resource. In this case, the BS may perform the FD operation in a way that performs DL transmission and UL reception for different UEs at the same time (or, the same time resource).

The content described below is generally explained assuming that the BS performs the FD operation and the UE performs the HD operation, but may also be applied to a case in which both the BS and the UE perform the FD operation. Based on the above discussion, the following describes in detail a method of configuring a BWP resource for an intra-carrier FD operation.

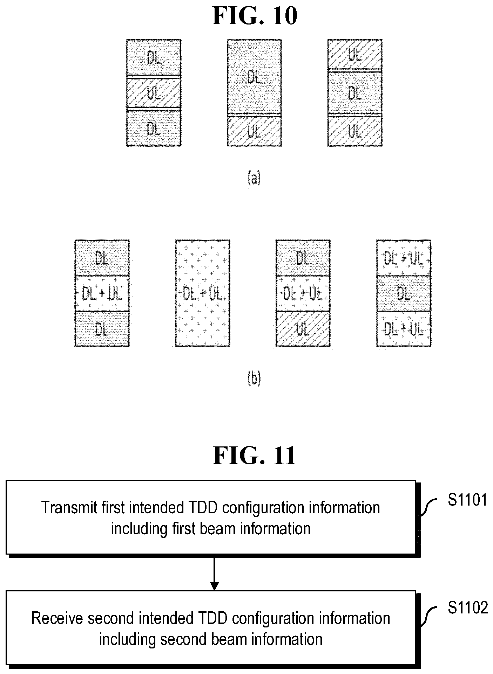

FIG. 9 and FIG. 10 are diagrams for explaining sub-band full duplex (SBFD) and single frequency full duplex (SFFD) operations.

Introduction of FDR has been discussed in certain scenarios (e.g., 3GPP RAN plenary). There are two types of FDRs discussed in the above scenarios, first, there is an FDR in which the BS transmits and receives DL and UL (or transmits DL and receives UL) at the same frequency at the same time, and the other is an FDR in which the BS transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the BS performs transmitting and receiving at the same time.

In operating this FDR, the BS may consider dividing time durations into half duplex (HD) and full duplex (FD). This may be broadly divided into sub-band full duplex (SBFD) and single frequency full duplex (SFFD), and a slot configuration and cell resource pattern therefor may be considered to operate based on the following example.

First, the SBFD may be considered as FIG. 9(a) and FIG. 10(a). In detail, referring to FIG. 10(a), a sub-band region of DL and a sub-band region of UL may not overlap each other. In this case, a guard band may exist between the sub-band region of DL and the sub-band region of UL (example of slot configuration). Alternatively, referring to FIG. 9(a), the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in FIG. 9(b) and FIG. 10(b). In detail, referring to FIG. 10(b), a sub-band region of DL and a sub-band region of UL may overlap each other. Alternatively, referring to FIG. 9(b), the SBFD operation may be performed based on a resource pattern of a cell or BS. For example, in the resource pattern, half-duplex (HD) slots/symbols and SBFD slots/symbols may be TDMed with each other.

In the above-described cases, SBFD (or SFFD) and dynamic/flexible TDD (hereinafter, d/f TDD) may be considered. Additionally, TDD configurations between cells or BSs may not be identical. Regarding these two environments, the similarities and differences in terms of CLI are described below.

### (1) In terms of measurement resource

### 1) For d/f TDD

- Aggressor: Inter-cell UE
- HD slot only

### 2) For SBFD

- Aggressor: Intra-cell UE and Inter-cell UE
- HD slot & SBFD slot
   -- If BWP of SBFD slot is similar with HD BWP: Same with HD slot
   -- If BWP of SBFD slot is different from HD BWP: e.g., measurement outside of active BWP, DL/UL sub-band

Up to Rel-17, the existing cross link interference (CLI) measurements may measure RSRP in SRS resources according to the existing scenarios, and RSSI measurement may be made for CLI-RSSI-resources. SRS resources for CLI have restrictions on the existing resource configuration, and CLI-RSSI-resource is a resource configured for CLI. All of these resources are resources in the time/frequency domain, and the following configurations are possible for CLI up to Rel-17. The method of configuring resources related to CLI may be briefly summarized as follows (see TS 38.331).

### (1) Measurement resources

### > SRS-Resource

- DL BWP id may be indicated to derive a reference point of SRS resource. In CLI measurement, there is a feature that links resources (especially DL) to BWP.
- For CLI SRS-RSRP measurements
   -- Resource type: Only periodic type (resource type = periodic)
   -- Periodicity: slot 1280, 2560 may not be configured (slot level, 1 to max 640)
   -- Number of symbols, repetition factor: n1
   -- Freq. hopping: b-hop (symbol level hopping) -> b-SRS(BW of SRS) -> frequency position index is constant (unless reconfigured)
   -- Sequence hopping, ptrs port, spatial relation info. -> disabled
   -- SRS Port 1

### > CLI-RSSI-Resource

- Minimum RB 4, within active DL BW
   -- Configure to min. 4 to eliminate ambiguity in introduction of Ref. SCS (15 to 120 SCS)
- Symbols within a slot boundary (w.r.t. reference SCS)
- UE performs CLI-RSSI measurement with SCS of active BWP (regardless of ref. SCS)
- Periodicity, offset: slot level (1 to max 640)
- QCL-D with latest received PDSCH and the latest monitored CORESET

### (2) Measurement/report trigger

### > SRS-RSRP, CLI-RSSI

### > Event triggered or periodical

- i1-event: interference exceeds absolute threshold
- Report interval: 120 ms to 30 min

With respect to resources configured according to the above "(1)" and "(2)", the UE may perform CLI measurements, and when interference measured on the above-described configured resources exceeds an absolute threshold (i1-threshold), the UE may perform (periodic) measurements on the configured resources, and report a value for the measured interference via L3 signaling. The report related to the CLI does not have L1/L2 signaling. This may be configured to the UE via RRC in relation to the existing event-triggered report and periodical report of CLI. In detail, event-triggered reports and periodical reports may be configured as shown in Table 5 and Table 6 below (see TS 38.331).

**Table 4**

| ***CLI-EventTriggerConfig* field descriptions** |
|---|
| ***i1-Threshold*** |
| Threshold value associated to the selected trigger quantity (e.g. SRS-RSRP, CLI-RSSI) to be used in CLI measurement report triggering condition for event i1. |
| ***eventId*** |
| Choice of CLI event triggered reporting criteria. |
| ***maxReportCLI*** |
| Max number of CLI measurement resource to include in the measurement report. |
| ***reportAmount*** |
| *Number* of measurement reports. |
| ***reportOnLeave*** |
| Indicates whether or not the UE shall initiate the measurement reporting procedure when the leaving condition is met for a CLI measurement resource in *srsTriggeredList* or *rssiTriggeredList,* as specified in 5.5.4.1. |
| ***timeToTrigger*** |
| Time during which specific criteria for the event needs to be met in order to trigger a measurement report. |

**Table 5**

| ***CLI-PeriodicalReportConfig* field descriptions** |
|---|
| ***maxReportCLI*** |
| Max number of CLI measurement resource to include in the measurement report. |
| ***reportAmount*** |
| *Number* of measurement reports. |
| ***reportQuantityCLI*** |
| The CLI measurement quantities to be included in the measurement report. |

Additionally, the existing CLI measurement/report up to Rel-17 is triggered by events (e.g., when an RSSI exceeds a specific threshold) or performed periodically (120ms to 30 minutes). The RSSI is measured and reported using CLI-RSSI resources, or RSRP is measured or reported using an SRS. However, considering dynamic/flexible TDD (d/f TDD) or SBFD, the current dynamics are insufficient. Particularly, in the case of the SBFD, an aggressor may be an intra-cell UE (in SBFD slots), and thus it is expected that the BS may quickly obtain CLI information and further reflect the CLI information in a scheduler. Here, the SBFD slot refers to a time period in which the UE operates in the HD mode, but the BS performs both transmission and reception simultaneously. The reason why the existing d/f TDD is not used is that coordination between BSs is difficult, and thus the coordination may need to be strengthened in order to use the existing d/f TDD. In such cases, CLI measurement/avoidance between BSs may be necessary.

The present disclosure proposes method(s) and/or procedure(s) for exchanging beam information between BSs for CLI measurement/avoidance. For example, method(s) and/or procedure(s) for transmitting beam information, which the BS is expected to operate within a specific time domain, to another BS are proposed.

For CLI measurement or avoidance between BSs (e.g., gNBs), it is possible to consider exchanging the spatial configuration information of the BS through Xn Application Protocol (XnAP), etc. along with or separately from an intended TDD DL-UL configuration in NR for exchanging TDD configuration information between BSs. The details thereof will be described. The spatial configuration information of the BS described below refers to information on beams that the BS is expected to operate at a given time. Although the spatial configuration information may be referred to as an intended spatial configuration, for the convenience of description, it is referred to as the beam information of the BS or the beam of the BS. However, this may differ from the actual beam operation of the BS.

The following shows the intended TDD DL-UL configuration described in 3GPP TS 38.423.

**Table 6**

| **IE/Group Name** | **Presence** | **Range** | **IE Type and Reference** | **Semantics Description** |
|---|---|---|---|---|
| NR SCS | M | | ENUMERATED (scs15, scs30, scs60, scs120, ...) | The values scs15, scs30, scs60 and scs120 corresponds to the sub carrier spacing in TS 38.104 [24]. |
| NR Cyclic Prefix | M | | ENUMERATED (Normal, Extended, ...) | The type of cyclic prefix, which determines the number of symbols in a slot. |
| NR DL-UL Transmission Periodicity | M | | ENUMERATED (ms0p5, ms0p625, ms1, mslp25, ms2, ms2p5, ms3, ms4, ms5, ms10, ms20, ms40, ms60, ms80, ms100, ms120, ms140, ms160, ...) | The periodicity is expressed in the format msXpYZ, and equals X. YZ milliseconds. |
| **Slot Configuration List** | | 1 | | |
| **>Slot Configuration List Item** | | *1.. <maxnoofs lots>* | | |
| >>Slot Index | | | INTEGER (0.. 5119) | |
| >>CHOICE *Symbol Allocation in Slot* | M | | | |
| *>>>All DL* | | | | |
| *>>>All UL* | | | | |
| *>>>Both DL and UL* | | | | |
| >>>>Number of DL Symbols | M | | INTEGER (0..13) | Number of consecutive DL symbols at the beginning of the slot identified by Slot Index. If extended cyclic prefix is used, the maximum value is 11. |
| >>>>Number of UL Symbols | M | | INTEGER (0..13) | Number of consecutive UL symbols in the end of the slot identified by Slot Index. If extended cyclic prefix is used, the maximum value is 11. |

FIG. 11 illustrates an exemplary flow of a communication method performed by a network node according to some implementation(s) of the present disclosure.

Referring to FIG. 11, the network node may transmit first intended TDD configuration information regarding a time periodicity period that includes one or more downlink time periods and one or more uplink time periods, where TDD is applied, to an adjacent network node (S1101). Next, the network node may receive a second intended TDD configuration information including second beam information from the adjacent network node (S1102). In this case, the first intended TDD configuration information may include first beam information regarding a first time period within the time periodicity period.

Additionally, the method may further include configuring a beam direction for communication with a UE based on the first intended TDD configuration information and the second beam information.

Here, an intended TDD configuration refers to a planned/expected TDD configuration to be configured with respect to the UE, which may be fully reflected in an actual TDD configuration or involve a change in the usage (DL/UL) for some time periods.

According to some implementations of the present disclosure, beam information for exchanging information regarding transmission and reception beams between BSs needs to generally be indicated along with time domain information. In this case, the indication method may be considered to be performed at the slot level or symbol level based on the intended TDD DL-UL configuration, that is, based on the SCS, CP, and periodicity configured in the intended TDD DL-UL configuration.

### Method of Representing BS Beam Information

For a method of representing BS beam information for exchanging information on transmission and reception beams between BSs, the following options may be considered.

Option 1) Based on Beam Association: Information on transmission (and/or reception) beams of the BS may be indicated based on beam association information such as a TCI state. For example, if beams used by the BS in a specific time period (e.g., slot index X) are the same as beams used by the BS in another specific time period (e.g., at slot index Y), or if the beam used at slot index X include the beam used at slot index Y, the information may be indicated based on the association.

Option 2) Logical Beam Index: Information on transmission (and/or reception) beams of the BS may be indicated based on the logical beam index. The difference between Option 1 and Option 2 is that for beam association information, Option 1 may indicate the inclusion relationship or hierarchy between beams, while in Option 2, the inclusion relationship between beams based on hierarchy may not be indicated. In other words, from the perspective of the BS receiving the information, it is only possible to determine whether the BS uses the same beams or different beams at different times in the time domain based on the logical index. However, signaling is simpler compared to Option 1.

Option 3) Directional Information: To represent information on the actual beam direction, it may be considered to indicate a beam based on the direction of the beam and/or the width of the beam (for example, 3dB bandwidth). To this end, the beam may be based on the absolute direction, based on coordinates that are globally applicable. It is possible to consider indicating the beam such that the actual direction of the beam may be inferred based on the transmission reception point (TRP) number/ID or sector number/ID, along with the relative direction.

Option 4) TRP Sector ID: For even a simpler indication, it may be considered to indicate only whether a specific TRP is activated at a specific point in time.

To indicate the beams of the BS, it may be considered to indicate only the DL transmission (Tx) beams of the BS based on the method(s) and/or procedure(s) described above. Alternatively, it may be considered to indicate both the DL Tx beams along with the UL reception (Rx) beams. Indicating only the DL Tx beam is advantageous for identifying potential aggressors, while indicating both the DL Tx beam and the UL Rx beam is beneficial for identifying not only potential aggressors but also potential victims. In this case, when only the Tx beam is indicated, that is, when only the DL Tx beam is indicated, the beam indication information may not specify whether it is DL or UL. When the UL Rx beam is also indicated, that is, when both the DL Tx beam and the UL Rx beam are indicated, the link direction (DL or UL) also needs to be indicated. In this case, when the intended TDD DL-UL configuration is exchanged between BSs via XnAP, whether it is DL or UL may be implicitly determined without being explicitly indicated.

When information on the beams of the BS is indicated according to the method(s) and/or procedure(s) described above, it may be considered to indicate the information in association with the following items or information on some of the items.

### Time Domain Information

Option 1) It is possible to consider indicating/exchanging information on the beams of the BS at all times within a periodicity.

The periodicity may refer to a periodicity used in the intended TDD DL UL configuration.

Option 2) It is possible to consider indicating/exchanging information on the beams of the BS for part of time within the periodicity.

For the DL Tx beam of the BS, the part of time within the periodicity may refer to the following: time when the BS is expected to become an aggressor. For example, since the TDD configuration is typically arranged based on downlink-flexible-uplink, the part of time may mean all or some of the times when DL transmission is performed within the periodicity, such as first few slots or symbols within the periodicity. Alternatively, the part of time may refer to times when specific signals/channels transmitted are transmitted by the BS, i.e., times when cell-specific or group of UE common signals/channels are transmitted to the UE. For example, the part of time may refer to times when the BS is expected to transmit an SSB/PBCH block, a CSI-RS, a type0-PDCCH, and/or a specific CORESET, and it may be considered that the BS exchanges beam information via XnAP for the times when the specific signals/channels are expected to be transmitted.

For the UL Rx beam of the BS, the part of time within the periodicity may refer to the following: time when the BS needs to always receive. That is, the part of time refer to times when the BS may potentially become a victim. For example, since the TDD configuration is typically arranged with downlink-flexible-uplink, the part of time may mean all or some of the times when the BS performs UL reception, such as last few slots or symbols within the periodicity. Alternatively, the part of time may refer to times when specific signals/channels are expected to be received by the BS, i.e., times when cell-specific or group of UE common signals/channels are expected to be transmitted by the UE. For example, the part of time may refer to times when the BS is expected to receive a RACH from the UE (such as times when the BS expects to receive the RACH from the UE based on SSB-to-RO (RACH occasion) mapping). It may be considered that the BS exchanges beam information via XnAP for the times when the specific signals/channels are expected to be received.

Option 3) It is possible to consider indicating/exchanging information on the beams of the BS for a specific time period.

Here, the specific time period may refer to the following. It may be considered that the BS exchanges beam information only for times when the BS may have a different link direction (DL or UL) with an adjacent BS in the network. The time when the BS may have a different link direction (DL or UL) with another BS may refer to specific slots and/or symbols within the periodicity that are designated by prior agreement or arrangement. Alternatively, the time may refer to a time when the BS indicates to flexibly change DL or UL (for example, a time when the BS indicates flexible resources to the UE, which the BS serves, via a TDD UL-DL configuration, such as *tdd-UL-DL-ConfigurationCommon* and/or *tdd-UL-DLConfigurationDedicated*). Alternatively, the time may refer to a time when the BS is operating in SBFD or is expected to operate in the SBFD, i.e., a time when the BS is expected to perform both DL and UL simultaneously on the same or different frequencies. The time resources when the BS is expected to operate in the SBFD or when another BS is expected to operate in the SBFD may be some time periods within the periodicity, as designated by prior agreement or arrangement. Alternatively, the time resources may refer to time resources explicitly and/or implicitly indicated by the BS as SBFD slots to the UE, which is served by the BS, via RRC/MAC-CE/DCI, etc.

### Frequency Domain Information

Option 1) It is possible to consider indicate a single beam for the entire band operated by the BS.

In such cases, the beam may not be associated with information in the frequency domain, or the BS may indicate the frequency domain for the entire band operated by the BS.

Option 2) It is possible to consider indicating multiple beams for the entire band operated by the BS.

That is, it may be indicated that different beams are transmitted and received with specific frequency granularity. The frequency granularity may be used to indicate the beams of the BS for a unit of a specific frequency band based on an absolute radio frequency channel number (ARFCN). Alternatively, the frequency domain granularity may be represented at the RB level or RB group level in the frequency band operated by the BS, and the beams of the BS may be indicated for the frequency band.

Option 3) It is possible to consider indicating a single beam for only some of the bands operated by the BS.

This may be especially useful when there is a BS operating SBFD in the network or when it is expected that there will be a BS operating the SBFD in the network. For the BS operating the SBFD, specific frequency bands within the entire frequency band operated by the BS are used for DL, while others are used for UL. Therefore, when the DL Tx beam is indicated, using the methods of Option 1 or Option 2 may lead to signaling ambiguity because it may signal as if beams are used in frequency bands that are not actually in operation. Therefore, the BS may consider indicating beams only for a specific frequency region within the frequency resources where the BS operates the SBFD or within the frequency resources where the BS in the network is expected to operate the SBFD, only for a specific frequency region based on the ARFCN, or only for a specific frequency region based on the RB. Such specific frequency band may be determined by the BS based on prior agreement or arrangement. Alternatively, it may be considered that the BS determines all or some of the cell-specific or group of UE common frequency resources where DL and UL are expected to be performed simultaneously, which are indicated by the BS to the UE via RRC/MAC-CE/DCI.

By exchanging spatial configuration information between BSs according to the method(s) and procedure(s) described above, the BS may adjust the beam direction based on beam information received from another (adjacent) BS. Based on the adjustment of the beam direction, the BS may effectively perform CLI avoidance related to other (adjacent) BSs in the spatial domain.

A network node may perform operations according to some implementations of the present disclosure in performing wireless communication. The network node may include: at least one transceiver; at least one processor; and at least one computer memory operably connected to the at least one processor and storing instructions that, when executed, cause the at least one processor to perform the operations according to some implementations of the present disclosure. A processing device for the network node may include: at least one processor; and at least one computer memory operably connected to the at least one processor and storing instructions that, when executed, cause the at least one processor to perform the operations according to some implementations of the present disclosure. A computer-readable (non-volatile) storage medium may store at least one computer program including instructions that, when executed by at least one processor, cause the at least one processor to perform the operations according to some implementations of the present disclosure. A computer program or computer program product may include instructions that are recorded on at least one computer-readable (non-volatile) storage medium and, when executed, cause at least one processor to perform the operations according to some implementations of the present disclosure.

In the network node, the processing device, the computer-readable (non-volatile) storage medium, and/or the computer program product, the operations may include: transmitting, to the adjacent network node, first intended TDD configuration information regarding a time periodicity period that includes one or more DL time periods and one or more UL time periods to which TDD is applied; and receiving, from the adjacent network, second intended TDD configuration information including second beam information. The first intended TDD configuration information may include first beam information regarding a first time period within the time periodicity period.

In some implementations of the present disclosure, the operations may further include configuring a beam direction for communication with a UE based on the first intended TDD configuration information and the second beam information.

In some implementations of the present disclosure, the first beam information may include a TCI state ID related to the first time period.

In some implementations of the present disclosure, the first beam information may include beam index information related to the first time period.

In some implementations of the present disclosure, the first beam information may include information regarding a TRP ID activated for the first time period.

In some implementations of the present disclosure, the first time period may be a time period configured for an SBFD operation of the network node within the time periodicity period.

In some implementations of the present disclosure, the first time period may be a second time period for transmitting a cell-specific DL signal within the one or more DL time periods or a third time period for receiving a cell-specific UL signal within the one or more UL time periods.

In some implementations of the present disclosure, the time periodicity period may further include at least one flexible time period, and the first time period may be the at least one flexible time period.

In some implementations of the present disclosure, the second time period may be at least one of a time period configured for transmission of an SSB, a time period configured for transmission of a CSI-RS, a time period configured for transmission of a type0-PDCCH, or a time period in a specific CORESET. The third time period may be a time period configured for reception of a RACH.

In some implementations of the present disclosure, based on that a frequency band for the first time period is divided into a first sub-band for DL and a second sub-band for UL, the first beam information may include information on at least one of a beam direction for the first sub-band or a beam direction for the second sub-band.

According to some implementations of the present disclosure, CLI avoidance may be performed efficiently.

According to some implementations of the present disclosure, the time required for the BS to perform CLI measurement may be reduced.

According to some implementations of the present disclosure, beam information may be exchanged between BSs, thereby adjusting the beam direction.

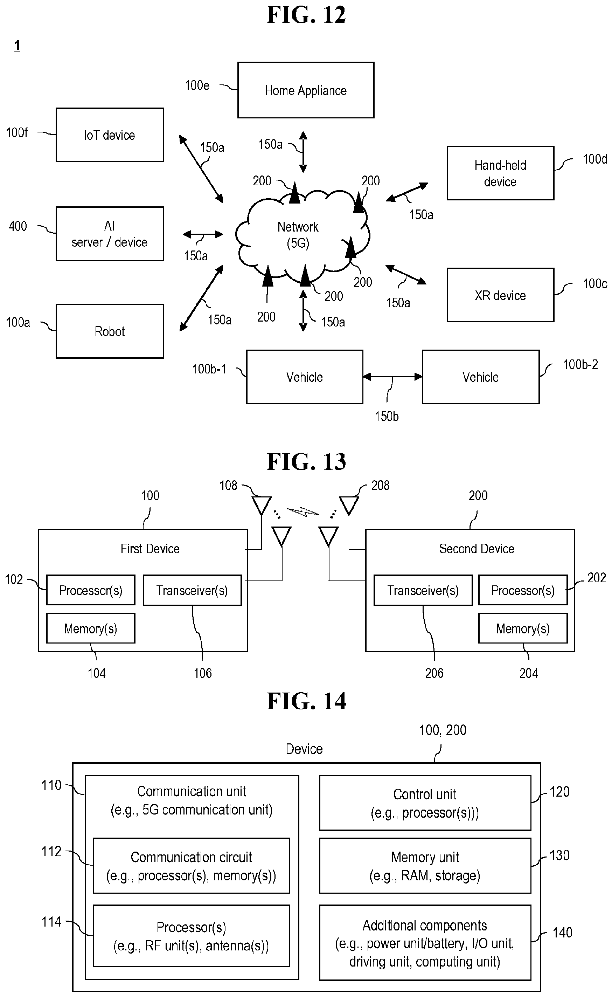

FIG. 12 illustrates an example of a communication system 1 to which implementations of the present disclosure are applied.

Referring to FIG. 12, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a headmounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless 200a may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 13 is a block diagram illustrating examples of communication devices capable of performing a method according to the present disclosure.

Referring to FIG. 13, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the afore-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the afore-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

For example, the processor(s) 102 may transmit TDD configuration information through the transceiver(s) 106. For example, the TDD configuration information may include intended TDD configuration information including beam information regarding some time periods within a time periodicity period. The time periodicity period includes one or more DL time periods and one or more UL time periods which are TDDed.

For example, the processor(s) 102 may receive the TDD configuration information from an adjacent node through the transceiver(s) 106. For example, the TDD configuration information may include the intended TDD configuration information including beam information regarding the adjacent node.

The operations of the processor(s) 102 may be performed based on the method(s) and/or procedure(s) described above in Options 1 to 3.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

For example, the processor(s) 202 may transmit TDD configuration information through the transceiver(s) 206. For example, the TDD configuration information may include intended TDD configuration information including beam information on some timer periods within a time periodicity period. The time periodicity period includes one or more DL time periods and one or more UL time periods where TDD is applied.

For example, the processor(s) 202 may receive the TDD configuration information from an adjacent node through the transceiver(s) 206. For example, the TDD configuration information may include the intended TDD configuration information including beam information on the adjacent node.

The operations of the processor(s) 202 may be performed based on the method(s) and/or procedure(s) described above in Options 1 to 3.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 14 illustrates another example of a wireless device capable of performing implementation(s) of the present disclosure.

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast UE, a hologram device, a public safety device, an MTC device, a medicine device, a fintech device (or a finance device), a security device, a climate/environment device, the AI server/device (400 of FIG. 12), the BS (200 of FIG. 12), a network node, etc. The wireless device may be used in a mobile or fixed place according to a use-case/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### Industrial Availability

The implementations of the present disclosure may be used in a BS, a UE, or other equipment in a wireless communication system.

## Claims

1. A method of performing, by a network node, communication with an adjacent network node in a wireless communication system, the method comprising:
transmitting, to the adjacent network node, first intended time division duplex (TDD) configuration information regarding a time periodicity period that includes one or more downlink time periods and one or more uplink time periods to which TDD is applied; and
receiving, from the adjacent network, second intended TDD configuration information including second beam information.
wherein the first intended TDD configuration information includes first beam information regarding a first time period within the time periodicity period.

2. The method of claim 1, further comprising:
configuring a beam direction for communication with a user equipment (UE) based on the first intended TDD configuration information and the second beam information.

3. The method of claim 1, wherein the first beam information includes a transmission configuration indication (TCI) state identity (ID) related to the first time period.

4. The method of claim 1, wherein the first beam information includes beam index information related to the first time period.

5. The method of claim 1, wherein the first beam information includes information regarding a transmission reception point (TRP) identity (ID) activated for the first time period.

6. The method of claim 1, wherein the first time period is a time period configured for a sub-band full duplex (SBFD) operation of the network node within the time periodicity period.

7. The method of claim 1, wherein the first time period is a second time period for transmitting a cell-specific downlink signal within the one or more downlink time periods or a third time period for receiving a cell-specific uplink signal within the one or more uplink time periods.

8. The method of claim 1, wherein the time periodicity period further includes at least one flexible time period, and
wherein the first time period is the at least one flexible time period.

9. The method of claim 7, wherein the second time period is at least one of a time period configured for transmission of a synchronization signal block (SSB), a time period configured for transmission of a channel state information reference signal (CSI-RS), a time period configured for transmission of a type 0 physical downlink control channel (type0-PDCCH), or a time period in a specific control resource set (CORESET), and
wherein the third time period is a time period configured for reception of a random access channel (RACH).

10. The method of claim 1, wherein based on that a frequency band for the first time period is divided into a first sub-band for downlink and a second sub-band for uplink, the first beam information includes information regarding at least one of a beam direction for the first sub-band or a beam direction for the second sub-band.

11. A processing device configured to control a network node, the processing device comprising:
at least one processor; and
at least one memory connected to the at least one processor and storing instructions that, based on execution by the at least one processor, cause the network node to:
transmit, to an adjacent network node, first intended time division duplex (TDD) configuration information regarding a time periodicity period that includes one or more downlink time periods and one or more uplink time periods to which TDD is applied; and
receive, from the adjacent network, second intended TDD configuration information including second beam information.
wherein the first intended TDD configuration information includes first beam information regarding a first time period within the time periodicity period.

12. A non-transitory computer-readable storage medium having recorded thereon instructions for executing the method of Claim 1.

13. A network node configured to perform communication with an adjacent network node in a wireless communication system, the network node comprising:
at least one transceiver;
at least one processor; and
at least one computer memory operably connected to the at least one processor and storing instructions that, when executed, cause the at least one processor to perform operations comprising:
controlling the at least one transceiver to transmit, to the adjacent network node, first intended time division duplex (TDD) configuration information regarding a time periodicity period that includes one or more downlink time periods and one or more uplink time periods to which TDD is applied; and
receiving, from the adjacent network, second intended TDD configuration information including second beam information.
wherein the first intended TDD configuration information includes first beam information regarding a first time period within the time periodicity period.

14. The network node of claim 13, wherein the operations further comprise configuring a beam direction for communication with a user equipment (UE) based on the first intended TDD configuration information and the second beam information.

15. The network node of claim 13, wherein the first beam information includes a transmission configuration indication (TCI) state identity (ID) related to the first time period.
